(19) Europäisches Patentamt
European Patent Office
Office européen des brevets

(11) Veröffentlichungsnummer: **0 132 746**
**B1**

(12) # EUROPÄISCHE PATENTSCHRIFT

(45) Veröffentlichungstag der Patentschrift: **15.10.86**

(51) Int. Cl.⁴: **C 08 L 63/00**, C 08 G 59/68, H 01 B 3/40, C 08 K 7/02

(21) Anmeldenummer: **84108357.9**

(22) Anmeldetag: **16.07.84**

(54) **Verfahren zur Herstellung elektrisch isolierender Verbundwerkstoffe.**

(30) Priorität: **29.07.83 DE 3327711**

(43) Veröffentlichungstag der Anmeldung: **13.02.85 Patentblatt 85/7**

(45) Bekanntmachung des Hinweises auf die Patenterteilung: **15.10.86 Patentblatt 86/42**

(84) Benannte Vertragsstaaten: **AT BE CH DE FR GB IT LI NL SE**

(56) Entgegenhaltungen:
**DE-A-2 738 890**
**DE-B-2 306 433**
**US-A-3 556 925**

(73) Patentinhaber: **Siemens Aktiengesellschaft Berlin und München, Wittelsbacherplatz 2, D-8000 München 2 (DE)**

(72) Erfinder: **Kleeberg, Wolfgang, Dr., Hessenstrasse 7, D-8520 Erlangen (DE)**
Erfinder: **Hacker, Heinz, Dr., Kaiserslauterer Strasse 9, D-8500 Nürnberg (DE)**
Erfinder: **Hauschildt, Klaus- Robert, Dipl.- Ing., Balthasar- Neumann- Strasse 83, D-8500 Nürnberg (DE)**

**EP 0 132 746 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Die Erfindung betrifft ein Verfahren zur Herstellung elektrisch isolierender Verbundwerkstoffe mit hohem spezifischen E-Modul und hoher elektrischer Festigkeit, bestehend aus einem vernetzten Epoxidharz oder Epoxidharzgemisch und einer Faserverstärkung auf synthetischer Polymerbasis.

In der Elektrotechnik werden oft Isolierbauteile hoher mechanischer Festigkeit und geringer Dichte in Form von Verbundwerkstoffen benötigt, d.h. Laminate aus einer Harzmatrix und Verstärkungsfasern. Dies gilt beispielsweise für hohlzylindrische Druck- oder Zugstangen, die in Hochspannungsleistungsschaltern Verwendung finden, und zwar dann, wenn auf Hochspannungspotential liegende Schaltstellen durch einen auf Erdpotential liegenden Antrieb zu schalten sind.

Bei Schaltstellenabständen bis zu einigen Metern sind Isolierstoffrohre mit einem kleinen Verhältnis von Wandstärke zu Durchmesser erforderlich, um günstige räumliche Abmessungen bei möglichst geringem Gewicht zu erreichen. Verbundwerkstoffe bzw. Laminate auf der Basis von Glasfasern und ungesättigten Polyesterharzen bzw. Glasfasern und Epoxidpolyadditionsharzen besitzen durchschnittlich eine Dichte von 1,8 $g \cdot cm^{-3}$. Durch die Verwendung von Fasermaterialien auf synthetischer Polymerbasis läßt sich die Laminatdichte im Mittel zwar auf 1,3 $g \cdot cm^{-3}$ verringern, mangels geeigneter Imprägnierharzsysteme konnten bislang aber die Vorzüge derartiger Fasern, nämlich niedrige Dichte und hohe Zugfestigkeit nicht ausgenützt werden.

Isolierstoffrohre und -stangen für Hochspannungsleistungsschalter sind beispielsweise aus der DE—PS 22 64 341 und der DE—AS 24 29 475 bekannt. Zur Herstellung der Rohre bzw. Stangen dient beispielsweise ein Isolierstoff aus in einem durch Polyaddition aushärtbaren Gießharz, insbesondere einem Epoxidharz, eingebetteten Gewebe; das Gewebe kann aus Kunststoff und/oder Glasfasern bestehen. Bei derartigen Isolierstoffen ist aber der Verbund zwischen Harzmatrix und Fasereinlage nicht ausreichend.

Aufgabe der Erfindung ist es, das Verfahren der eingangs genannten Art zur Herstellung elektrisch isolierender Verbundwerkstoffe auf der Basis vernetzter Epoxidharze derart auszugestalten, daß Verbundwerkstoffe mit einer höheren Festigkeit und einem höheren Elastizitätsmodul erhalten werden.

Dies wird erfindungsgemäß dadurch erreicht, daß die Vernetzung des Epoxidharzes durch anionische Polymerisation unter Verwendung von tertiären Aminen der allgemeinen Formel

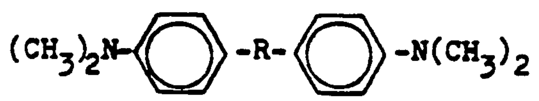 ,

wobei R folgende Bedeutung hat:

$>CH_2$, $>CHOH$, $>CO$, $>CS$, $-O-$, $-S-$, $>SO_2$, 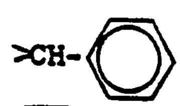 ,

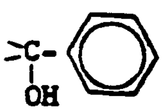 , 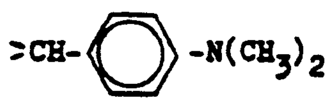 und 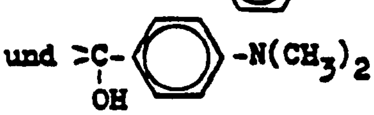 ,

als Polymerisationskatalysator erfolgt.

Überraschenderweise hat sich nämlich gezeigt, daß sich bei Laminaten aus vernetztem Epoxidharz mit Gewebeeinlagen aus Kunststoff dann eine höhere Festigkeit und ein höherer Elastizitätsmodul (E-Modul) erzielen lassen, wenn die Vernetzung des Epoxidharzes durch eine anionisch — mit speziellen Katalysatoren — initiierte Polymerisation erfolgt; die Erhöhung der Festigkeit des Verbundwerkstoffes beträgt dabei bis zu 60% und die Erhöhung des E-Moduls bis zu 100% und darüber. Im Gegensatz dazu werden bei den bekannten Verbundwerkstoffen (vgl. beispielsweise DE—PS 22 64 341) die Epoxidharze durch Polyaddition gehärtet, was insbesondere mit Carbonsäureanhydriden erfolgt.

Beim erfindungsgemäßen Verfahren werden — auf 100 Masseteile Epoxidharz — vorteilhaft 0,05 bis 10 Masseteile Polymerisationskatalysator eingesetzt; vorzugsweise werden 0,1 bis 5 Masseteile Katalysator verwendet. Es können dabei auch Katalysatorgemische zum Einsatz gelangen, d.h. Gemische von tertiären Aminen der genannten Art.

Die beim erfindungsgemäßen Verfahren verwendete Faserverstärkung auf synthetischer Polymerbasis besteht vorzugsweise aus Polyethylenterephthalat und/oder aromatischem Polyamimd. Grundsätzlich können aber auch andere Kunstfasern mit hohem E-Modul und polarem Aufbau eingesetzt werden. Die Faserverstärkung kann in Form von Geweben, Vliesen oder Rovings zum Einsatz gelangen.

Beim erfindungsgemäßen Verfahren werden vorteilhaft folgende Epoxidharze eingesetzt:

Bisphenol-A-diglycidylether, Bisphenol-F-diglycidylether, Polyglycidylether von Phenol/Formaldehyd- oder Kresol/Formaldehyd-Novolaken, Hexahydrophthalsäurediglycidylester, Hydantoinepoxidharze, Glycidylisocyanurate, wie Triglycidylisocyanurat, und Urazolepoxide. Vorzugsweise werden dabei Epoxidharzgemische verwendet, d.h. Gemische aus zwei oder mehreren Epoxidharzen. Epoxidharzen der vorstehend gennanten Art können auch aliphatische Verbindungen, wie hydrierte Bisphenol-A- und Bisphenol-F-diglycidylether, zugesetzt werden.

Die nach dem erfindungsgemäßen Verfahren hergestellten elektrisch isolierenden Verbundwerkstoffe eignen sich insbesondere als hochfeste Laminate und zur Herstellung von Schaltstangen für $SF_6$-Leistungsschalter.

Anhand von Ausführungsbeispielen soll die Erfindung noch näher erläutert werden.

Für dei Herstellung von Laminat-Prüfkörpern wurden folgende Fasergewebe verwendet:

(a) Mischgewebe aus aromatischem Polyamid und Polyethylenterephthalat (Leinwandbindung, 7 Kettfäden/cm, 7 Schußfäden/cm, Flächengewicht: 174 g/m$^2$);

(b) Gewebe aus aromatischem Polyamid (Leinwandbindung, 3 Kettfäden/cm, 12 Schußfäden/cm).

Die Prüfkörper wurden aus Laminatplatten (180 × 110 mm$^2$) mit einer Stärke von 3,2 mm (16 Gewebelagen) bzw. 10 mm (55 Gewebelagen) gefertigt. Die Laminatplatten selbst wurden — in entsprechenden Gießformen — nach dem technisch gebräuchlichen Vakuumimprägnierverfahren hergestellt. Die verwendeten Gewebe wurden 20 h bei 100°C und 3 mbar vorgetrocknet.

Beispiel 1

In 100 Mt (Masseteile) eines Epoxidharzes auf der Basis von Bisphenol-F-diglycidylether werden bei 80°C unter Rühren 5 MT 4.4'-Bis(dimethylamino)-benzophenon gelöst. Anschließend wird die Lösung bei 80°C für die Dauer von 15 min bei 3 mbar entgast; sie kann dann zur Vakuumimprägnierung verwendet werden. Vernetzungsbedingungen: 24 h bei 120°C und 24 h bei 160°C.

Beispiel 2

50 MT Bisphenol-F-diglycidylether, 50 MT eines trifunktionellen Epoxidharzes auf Hydantoinbasis (EZ = 0,57; Araldit® XB 3085 der Ciba-Geigy AG, Basel) und 5 MT 4.4'-Bis(dimethylamino)-benzophenon werden bei 100°C unter Rühren gemischt. Nachdem sich das 4.4'-Bis(dimethylamino)-benzophenon gelöst hat, wird bei 100°C für die Dauer von 15 min bei 3 mbar entgast. Die Vernetzung erfolgt analog Beispiel 1.

Beispiel 3

50 MT Bisphenol-A-diglycidylether, 40 MT eines trifunktionellen Epoxidharzes auf Hydantoinbasis (siehe Beispiel 2), 10 MT eines Epoxidharzes auf der Basis von hexahydrophthalsäurediglycidylester und 5 MT 4.4'-Bis(dimethylamino)-benzophenon werden entsprechend Beispiel 2 aufbereitet und entgast. Die Vernetzung erfolgt analog Beispiel 1.

Beispiel 4 (Vergleichsversuch)

Unter Verwendung eines Imprägnierharzes auf der Basis von Bisphenol-A-diglycidylether/Methylhexahydrophthalsäureanhydrid wurden Laminat-Prüfkörper entsprechend dem Stand der Technik hergestellt; Vernetzungsbedingungen: 90 min bei 120°C und 16 h bei 150°C.

Die an den Laminat-Prüfkörpern ermittelte Festigkeit der Verbundwerkstoffe, gemessen als Zugfestigkeit (nach DIN 54 455), ist in der folgenden Tabelle wiedergegeben. Daraus ergibt sich eine Erhöhung der festigkeit bis zu etwa 60%.

| Harz / Probe | Zugfestigkeit in N/mm$^2$ | | | |
|---|---|---|---|---|
| | Beispiel | | | |
| | 1 | 2 | 3 | 4 |
| Matrix | 74 | 90 | 89 | 63 |
| Laminat mit Gewebe (a) | 480 | 495 | 490 | 440 |
| Laminat mit Gewebe (b) | 660 | 780 | 775 | 500 |

Die höhere Verbundwerkstoff-Festigkeit ergibt sich auch aus Spaltkraftmessungen (nach DIN 53 463). Dabei wurden folgende Werte erhalten:

| | | | | |
|---|---|---|---|---|
| Laminate nach Beispiel: | (1) | (2) | (3) | (4) |
| Spaltkraft in N: | 2800 | 3350 | 3270 | 2000 |

Aus Beigeversuchen (nach DIN 53 452) wurden, wie die folgenden Zahlen verdeutlichen, Werte für den E-Modul (in N/mm$^2$) errechnet, die bis zu 100% höher liegen als die Vergleichswerte:

| | | | | |
|---|---|---|---|---|
| Beispiel: | (1) | (2) | (3) | (4) |
| Matrix: | 3640 | 4000 | 4160 | 4160 |
| Laminat: | 26350 | 34500 | 30670 | 16300 |

Aufgrund der hohen Werte des E-Moduls der Verbundwerkstoffe und aufgrund der niedrigen Dichte der eingesetzten Verstärkungsfasern ($\rho \sim 1{,}4\ g \cdot cm^{-3}$, im Vergleich zu Glasfasern mit $\rho = 2{,}5$ bis $3\ g \cdot cm^{-3}$) ergeben sich bei den erfindungsgemäß hergestellten Verbundwerkstoffen auch hohe Werte für den spezifischen E-Modul, der sich als Quotient aus E-Modul und Dichte errechnet. Die Verbundwerkstoffe weisen außerdem eine hohe elektrische Festigkeit auf. So ergeben beispielsweise Messungen der elektrischen Durschlagsfestigkeit an Rohrabschnitten (Durchmesser: 76/94 mm; Länge: 50 mm) Werte zwischen 50 und 70 kV/cm.

Die Versuchsergebnisse lassen ferner erkennen, daß bei den erfindungsgemäß hergestellten Verbundwerkstoffen weniger die Eigenfestigkeit der Matrixsysteme das Festigkeitsniveau bestimmt als vielmehr die bessere Haftung der Matrix an der Faser.

**Patentansprüche**

1. Verfahren zur Herstellung elektrisch isolierender Verbundwerkstoffe mit hohem spezifischen E-Modul und hoher elektrischer Festigkeit, bestehend aus einem vernetzten Epoxidharz oder Epoxidharzgemisch und einer Faserverstärkung auf synthetischer Polymerbasis dadurch gekennzeichnet, daß die Vernetzung des Epoxidharzes durch anionische Polymerisation unter Verwendung von tertiären Aminen der allgemeinen Formel

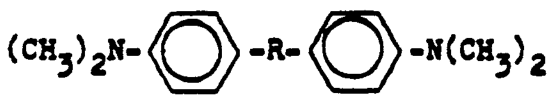 ,

wobei R folgende Bedeutung hat:

$>CH_2$, $>CHOH$, $>CO$, $>CS$, $-O-$, $-S-$, $>SO_2$, 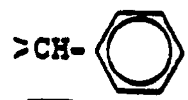 ,

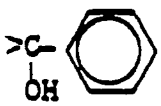 , 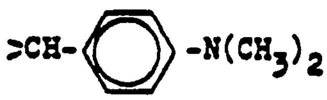 und 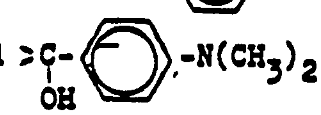 ,

als Polymerisationskatalysator erfolgt.

2. Verfahren nach Anspruch 1, dadurch gekennzeichnet, daß 0,05 bis 10 Masseteile, vorzugsweise 0,1 bis 5 Masseteile, an Polymerisationskatalysator eingesetzt werden, jeweils bezogen auf 100 Masseteile Epoxidharz.

3. Verfahren nach Anspruch 1 oder 2, dadurch gekennzeichnet, daß eine Faserverstärkung aus Polyethylenterephtalat und/oder aromatischem Polyamid verwendet wird.

4. Verfahren nach einem der Ansprüche 1 bis 3, dadurch gekennzeichnet, daß als Epoxidharze Bisphenol-A-diglycidylether, Bisphenol-F-diglycidylether, Polyglycidylether von Phenol/Formaldehyd- oder Kresol/Formaldehyd-Novolaken, Hexahydrophthalsäurediglycidylester, Hydantoinepoxidharze, Glycidylisocyanurate, Urazolepoxide oder Gemische dieser Verbindungen verwendet werden.

**Claims**

1. A process for the production of electrically insulating composites which have a high specific E-modulus and high electrical strength and consist of a cross-linked epoxy resin or epoxy resin mixture and a fibre reinforcement having a synthetic polymer base, characterised in that the cross-linking of the epoxy resin is effected by anionic polymerisation using as polymerisation catalyst tertiary amines of the general formula

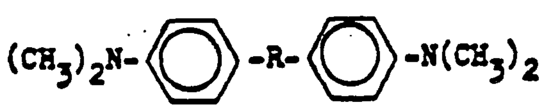 ,

where R has the following meaning:

$>CH_2$, $>CHOH$, $>CO$, $>CS$, $-O-$, $-S-$, $>SO_2$, 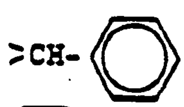 ,

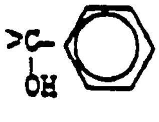 , 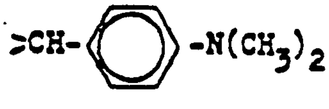 and 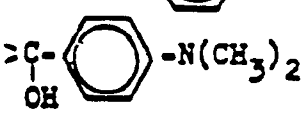

2. A process as claimed in Claim 1, characterised in that 0.05 to 10 parts by weight, preferably 0.1 to 5 parts by weight of polymerisation catalyst are used, in each case with reference to 100 parts by weight of epoxy resin.

3. A process as claimed in Claim 1 or Claim 2, characterised in that a fibre reinforcement consisting of polyethylene terephthalate and/or aromatic polyamide is used.

4. A process as claimed in one of Claims 1 to 3, characterised in that Bisphenol-A-diglycidylether, Bisphenol-F-diglycidylether, polyglycidylethers of phenol/formaldehyde or cresol/formaldehyde novolaks, hexahydrophthalic acid diglycidyl ester, hydantoinepoxide resins, glycidyl isocyanurates, urazole epoxides, or mixtures of said compounds, are used as epoxy resins.

**Revendications**

1. Procédé de fabrication de matériau composite isolant électriquement ayant un grand module spécifique d'élasticité et une grande rigidité diélectrique, constitué d'une résine époxydique ou d'un mélange de résine époxydique réticulée et d'un renfort fibreux à base de polymère synthétique, caractérisé en ce qu'il consiste à effectuer la réticulation de la résine époxydique par polymérisation anionique en utilisant des amines tertiaires de formule développée

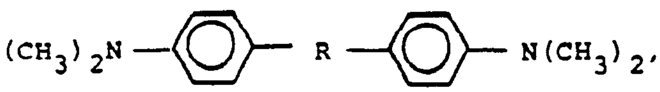

dans laquelle R a la signification suivante:

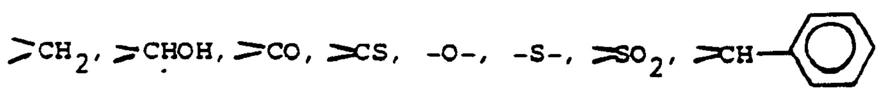,

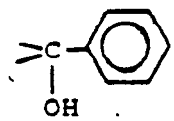, 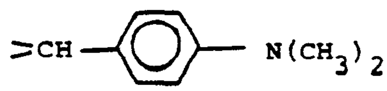 et

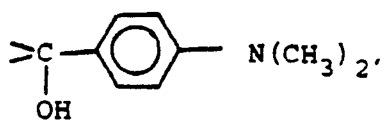

comme catalyseur de polymérisation.

2. Procédé suivant la revendication 1, caractérisé en ce qu'il consiste à mettre en oeuvre de 0,05 à 10 parties en poids et, de préférence, de 0,1 à 5 parties en poids de catalyseur de polymérisation pour 100 parties en poids de résine époxydique.

3. Procédé suivant la revendication 1 ou 2, caractérisé en ce qu'il consiste à utiliser un renfort de fibres en poly(téréphtalate d'éthylène) et/ou en polyamide aromatique.

4. Procédé suivant l'une des revendications 1 à 3, caractérisé en ce qu'il consiste à utiliser comme résine époxydique de l'éther diglycidylique de bisphénol A, de l'éther diglycidylique de bisphénol F, de l'éther polyglycidylique de novolaque phénol/formaléhyde ou crésol/formaldéhyde, un ester diglycidylique d'acide hexahydrophtalique, une résine d'hydantoïne époxydique, de l'isocyanurate glycidylique, des époxydes d'urazole ou des mélanges de ces composés.